Europäisches Patentamt

European Patent Office

Office européen des brevets

(11) Veröffentlichungsnummer: **0 292 675 B1**

## (12) EUROPÄISCHE PATENTSCHRIFT

(45) Veröffentlichungstag der Patentschrift: **02.12.92**

(21) Anmeldenummer: **88105375.5**

(22) Anmeldetag: **02.04.88**

(51) Int. Cl.5: **G11B 7/24**, G11B 7/26

(54) **Irreversible optische Aufzeichnungsmedien und Verfahren zu ihrer Herstellung.**

(30) Priorität: **15.04.87 DE 3712858**

(43) Veröffentlichungstag der Anmeldung:
**30.11.88 Patentblatt 88/48**

(45) Bekanntmachung des Hinweises auf die
Patenterteilung:
**02.12.92 Patentblatt 92/49**

(84) Benannte Vertragsstaaten:
**BE DE FR GB NL**

(56) Entgegenhaltungen:
**EP-A- 0 107 379**
**EP-A- 0 110 730**
**EP-A- 0 251 119**

**PATENT ABSTRACTS OF JAPAN, Band 6, Nr. 51 (P-108)(929) 6. April 1982; & JP-A-56 165941**

**PATENT ABSTRACTS OF JAPAN, Band 9, Nr 285 (P-404)(2008), 12. November 1985; & JP-A-60125944**

**NATURE, Bd. 244, 3. August 1973, S, 281, 282, National Physical Laboratory, Teddington, MIddlesex, GB; P. CLAPHAM et al:"Reduction of Lens Reflexion by the "Moth Eye" Princi-**

**ple"**

(73) Patentinhaber: **BASF Aktiengesellschaft**
**Carl-Bosch-Strasse 38**
**W-6700 Ludwigshafen(DE)**

(72) Erfinder: **Werner, Arend, Dr.**
**Kurbrunnenstrasse 26**
**W-6702 Bad Dürkheim(DE)**
Erfinder: **Hibst, Hartmut, Dr.**
**Sternstrasse 215**
**W-6700 Ludwigshafen(DE)**
Erfinder: **Barzynski, Helmut, Dr.**
**An der Ameisenhalde 49**
**W-6702 Bad Dürkheim(DE)**

## Beschreibung

Die Erfindung betrifft irreversible optische Aufzeichnungsmedien zur Aufzeichnung von Informationen mittels lokaler Änderung der optischen Eigenschaften einer Aufzeichnungsschicht unter Einwirkung einer Lichtstrahlung sowie ein Verfahren zur Herstellung dieses Aufzeichnungsmediums. Es ist bekannt, daß sich die optischen Eigenschaften, wie z.B. die Reflexion, von Oberflächen stark unterscheiden, je nachdem, ob die Oberfläche plan ist, oder ob sie eine Mikrostrukturierung, eine sogenannte Textur aufweist, deren Abmessungen in der Größenordnung der Wellenlänge des Lichtes liegen. So ist die Reflektivität derartig mikrostrukturierter Oberflächen deutlich niedriger als im Falle ebener Oberflächen (P. Clapham und M. Hutley; Nature Vol. 244, S. 218 f. (1973)). Bei Verwendung von Metall- bzw. Halbleiteroberflächen, die einen hohen Absorptionskoeffizienten aufweisen, bewirkt die Reduktion der normalerweise hohen Reflektivität dieser Materialien durch Schaffung einer texturierten Oberfläche eine hohe Absorption der eingestrahlten Lichtenergie in einer dünnen Oberflächenzone. Die dadurch bedingte hohe Temperatur in dieser Zone, z.B. bei Bestrahlung mit einem intensiven Laserstrahl, kann zu einer Änderung der Oberflächenstruktur genutzt werden, die ihrerseits eine Änderung der optischen Eigenschaften bewirkt. Dieser Effekt kann zur irreversiblen optischen Speicherung ausgenutzt werden, wobei durch Einwirkung eines intensiven Laserstrahles lokal eine irreversible Änderung, z.B. der Reflektivität einer Metall- bzw. Halbleiterschicht hervorgerufen wird.

In Appl. Phys. Lett. 40, S. 622 (1982) wird ein optisch irreversibles Speichermedium beschrieben, das aus einer Ge-Schicht besteht, die mittels Ionenätztechniken texturiert wurde (Ge-Säulen mit ca. 200 nm Durchmesser). Durch Laserbestrahlung wird diese Textur eingeebnet. Nachteilig ist das sehr aufwendige und kostspielige Herstellungsverfahren derartiger ionengeätzter Oberflächen. Nach den Angaben in der EP-A 0 107 379 besteht die Aufzeichnungsschicht aus einem Metallfilm, der auf die texturierte Oberfläche eines Kunststoffsubstrates aufgebracht wird. Das texturierte Substrat wird mittels Spritzgußtechnik von einem Stamper abgenommen. Als Vorlage für den Masteringprozeß dient ein Laserinterferogramm, mit dem eine Photolackschicht belichtet wird, die nach anschließendem Entwickeln und chemischen Ätzen die gewünschte texturierte Oberfläche ergibt. Die mittels Laserinterferenz erzeugte Vorlage kann z.B. ein Muster aus Rillen in den unterschiedlichsten Anordnungen bzw. als Sonderform Ausstülpungen, die durch Kreuzung von Rillen hervorgerufen werden, aufweisen. Verfahrensbedingt ist dabei die streng periodische Anordnung der Rillen bzw. Ausstülpungen, die durch den angegebenen Herstellungsprozeß bedingt ist. Nachteilig ist deshalb zum einen, daß das Interferogramm nur eine begrenzte Variationsmöglichkeit zur Texturbildung gestatten und weiterhin einen komplizierten Herstellungsprozeß erfordert. Zum anderen führt diese periodische Anordnung in nachteiliger Weise zu ausgeprägten Unterschieden in der Reflektion in Abhängigkeit von der Polarisation des verwendeten Lichtes. Ferner ist die Reflektion in unerwünschter Weise stark vom Einfallswinkel des Lichtes abhängig. Die in dieser Druckschrift angegebenen Dimensionen der Rillen bzw. Ausstülpungen liegen bei Abständen von ca. 200 nm und Tiefen von mindestens 100 nm bis 400 nm.

In der EP-A-0 251 119, welche nicht vorveröffentlicht ist und Stand der Technik gemäß Art. 54-(3) EPÜ darstellt, wird ein irreversibles optisches Aufzeichnungsmedium beschrieben, das eine texturierte Aufzeichnungsschicht aus einer oder mehrerer Lagen von Polymerkügelchen und eine auf dieser texturierten Kunststoffschicht als Absorber wirkende aufgebrachte Metall- bzw. Halbleiterschicht aufweist. Mit Polymerkugeldurchmessern zwischen 30 und 5000 nm und insbesondere 200 nm lassen sich sehr feine Texturen herstellen, wobei als weiterer Vorteil dieses Medium die Erzeugung einer nicht periodischen Textur durch willkürliche Anordnung der Polymerkügelchen hervorzuheben ist. Es konnte gezeigt werden, daß diese Aufzeichnungsschicht hervorragende optische Eigenschaften, wie geringe Reflektivität im unbeschriebenen Fall und hohe Reflektivität nach Beschreiben mit einem Laser aufweist. Von Nachteil ist allerdings die Notwendigkeit für jedes einzelne Speichermedium eine Polymerkügelchenschicht aufzubringen. Damit ist dieses Verfahren unwirtschaftlich.

Aufgabe der vorliegenden Erfindung war es daher, ein irreversibles optisches Aufzeichnungsmedium und ein wirtschaftliches Verfahren zu seiner Herstellung bereitzustellen, das auf der einen Seite die Vorteile der kostengünstigen Vervielfältigung der texturierten Oberfläche im Spritzguß ausnutzt und das andererseits die nachteiligen Eigenschaften der auf laserinterferometrischem Wege hergestellten Vorlage umgeht.

Es wurde nun gefunden, daß ein irreversibles optisches Aufzeichnungsmedium, umfassend ein Substrat mit texturierter Oberfläche und einer auf dieser texturierten Substratoberfläche aufgebrachten Metall- oder Halbleiterschicht mit einer optischen Absorption von 5 bis 95 % und einer Dicke von 10 bis 50 nm, die gestellte Aufgabe löst, wenn die texturierte Oberfläche eine Struktur ohne periodische Anordnung von Erhebungen oder Vertiefungen mit einem Durchmesser von mehr als 200 nm und bis zu 500 nm aufweist und diese Struktur unter Einwirkung einer Lichtstrahlung veränderbar ist. Durch diese Veränderung der vorhandenen Struktur aufgrund der Lichteinstrahlung ändern sich dann die optischen Eigenschaften des Aufzeichnungsmediums.

In einer zweckmäßigen Ausgestaltung der erfindungsgemäßen Aufzeichnungsmedien bestehen die halbkugelförmigen Strukturen aus Erhebungen oder Vertiefungen mit einem einheitlichen Durchmesser von mehr als 200 nm und bis 500 nm. Darüber hinaus haben sich auch Strukturen aus einer Mischung halbkugelförmiger Erhebungen oder Vertiefungen mit unterschiedlichem Durchmesser zwischen mehr als 200 nm und bis zu 500 nm bewährt.

Das Aufzeichnungsmedium besteht aus einem für die benutzte Lichtstrahlung, im allgemeinen eine Laserstrahlung mit einer Wellenlänge zwischen 0,3 und 1,0$\mu$m, transparenten Substrat aus einem Kunststoff, wie z.B. Polycarbonat, PMMA oder Polystyrol mit texturierter Oberfläche und einer darauf aufgebrachten Metall- oder Halbleiterschicht, z.B. aus Gold, Platin, Silber, Germanium, Silicium sowie Legierungen dieser Materialien, wobei die Textur aus Strukturen der angegebenen Dimensionen besteht.

Gegenstand der Erfindung ist auch ein Verfahren zur Herstellung der derart gekennzeichneten optischen Aufzeichnungsträger durch Herstellen des texturierten Substrats mittels Pressen oder Spritzgußtechnik unter Verwendung eines Stampers und anschließendes Beschichten der texturierten Oberfläche des Substrats mit einer Metall- oder Halbleiterschicht mit einer optischen Absorption von 5 bis 95 % in einer Dicke von 10 bis 50 nm, wobei zur Herstellung dieses Stampers eine Dispersion von Polymerkügelchen mit Durchmessern zwischen mehr als 200 nm und bis 500 nm in einem Lösungsmittel auf ein ebenes Hilfsubstrat aufgebracht, dieses mit einer elektrisch leitenden Schicht bedampft und anschließend diese Schicht soweit verdickt wird, daß die Vorlage und die als Stamper dienende Metallreplik voneinander getrennt werden können.

Im einzelnen wird das erfindungsgemäße Verfahren derart durchgeführt, daß zuerst eine Dispersion von Polymerkügelchen durch vorzugsweise Schleuderbeschichtung in einer möglichst dünnen Schicht, vorzugsweise einer Monolage dieser Polymerkügelchen, auf ein ebenes Hilfsubstrat, im allgemeinen Glas, aufgebracht wird. Sowohl die Herstellung dieser Polymerkügelchen in der gewünschten Teilchengröße, deren Dispersion sowie das Aufbringen auf ein Trägermaterial sind bekannt und u.a. in der EP-A-0 251 119 beschrieben.

Auf diese Schicht wird nun durch Hochvakuumbedampfung oder durch Kathodenzerstäubung eine 0,1 bis 1,0$\mu$m dicke Metallschicht, im allgemeinen aus Silber, Nickel oder Platin, vorzugsweise aus Silber aufgebracht. Diese auf den Polymerkügelchen befindliche Metallschicht wird dann in bekannter Weise verstärkt, beispielsweise auf chemischem, galvanischem oder chemisch-galvanischem Weg. Hierzu wird üblicherweise Nickel eingesetzt. Danach sollte die gesamte Metallschicht zweckmäßigerweise eine Dicke von 0,1 bis 0,5 mm aufweisen. Der so erhaltene Negativabdruck wird dann durch Auswaschen mit einem Lösungsmittel für die Polymerkügelche, z.B. mit Toluol, und ggf. nach oberflächlicher Passivierung mit einem Oxidationsmittel zur Herstellung weiterer Metallkopien (Stamper) verwendet. Die so hergestellten Metallplatten dienen dann als Prägeform für die Herstellung der Substrate mit texturierter Oberfläche. Ihre Herstellung geschieht in bekannter Weise durch Spritzgießen, Spritzprägen, Pressen oder Gießen. Als Polymere kommen hierfür Polycarbonate, Polyester, Polyvinylchlorid, Polymethstyrol, Polymethacrylester und Polymethylmethacrylester in Frage. Auf diese Weise lassen sich sowohl Positiv- als auch Negativabdrücke der verwendeten Vorlage reproduzieren.

Das danach vorhandene Substrat mit der texturierten Oberfläche wird schließlich durch Aufbringen der speziellen Metall- oder Halbleiterschicht mit einer optischen Absorption von 5 bis 95 % in Dicke von 10 bis 50 nm zum erfindungsgemäßen optischen Aufzeichnungsmedium. Diese Metall- bzw. Halbleiterschicht wird in bekannter Weise durch einen Hochvakuumbeschichtungsprozeß wie z.B. durch Sputtern oder durch Aufdampfen hergestellt.

Diese erfindungsgemäßen optischen, irreversiblen Aufzeichnungsmedien haben gegenüber solchen nach dem Stand der Technik den Vorteil, daß sie eine Textur ohne periodische Anordnung aufweisen. Zudem ist von besonderem Vorteil, daß sie sich in einfacher und kostengünstiger Weise herstellen lassen.

Ferner erlaubt das erfindungsgemäße irreversible optische Aufzeichnungsmedium die Verwendung von Kunststoffen, die zwar nicht in Form von aufschleuderbaren feinen Kügelchen herstellbar sind, die aber aufgrund ihrer chemischen und physikalischen Eigenschaften Vorteile gegenüber den in Form von Kügelchen verfügbaren Polymeren bei der Erzeugung von Marken durch Laserbestrahlung bieten.

Zur Erzeugung von bei solchen Aufzeichnungsmedien bekannten Spurrillen bzw. von jeglicher anderer vorgeprägter Information in der Aufzeichnungsschicht kann die aus Polymerkügelchen bestehenden Vorlage vor dem Metallabscheidungsprozeß auf einem geeigneten Laserschreibplatz mit einer Spurrille versehen bzw. mit Information in bestimmten Segmenten beschrieben werden.

Die Anwendung der erfindungsgemäß hergestellten texturierten Oberfläche ist nicht auf optisch irreversible Aufzeichnungsschichten der oben beschriebenen Art begrenzt. Man kann das spritzgegossene texturierte Substrat auch zur Verbesserung anderer, bereits bekannter irreversibler bzw. reversibler optischer Speichermedien einsetzten. Da diese texturierten Oberflächen aufgrund der regellosen Anordnung der halbkügelförmigen Erhebungen bzw. Vertiefungen keine Polarisationseffekte zeigen, lassen sie sich auch der Erhöhung der Lichtabsorption und damit zur Steigerung der Schreibempfindlichkeit im Falle magnetooptischer Speicherschichten einsetzten. Derartig texturierte Oberflächen können ferner als Substrat für Magnetspeicherschichten Anwendung finden, um die Flugfähigkeit der Magnetköpfe zu gewährleisten.

Beispiel

Eine PMMA-Platte mit einem Durchmesser von 18 cm wurde durch Spincoaten mit einer Polystyrolemulsion mit einer Schicht aus Polystyrolkugeln (Kugeldurchmesser 250 nm) versehen. In einer Hochvakuumbedampfungsanlage wurde diese texturierte Schicht mit einer 100 nm dicken Ag-Schicht beschichtet. In einem Galvanikbad mit wäßrigem Nickelsulfamat als Elektrolyt wurde bei 55° C anodisch auf die Silberschicht Nickel in einer Schichtdicke von 0,28 mm abgeschieden. Dabeiwurde zur Vermeidung von Verformungen mit langsam ansteigender Stromstärke (0,1 Amp. bis 10 Amp.) gearbeitet. Danach wurde die Nickelplatte (Stamper) von Der PMMA-Platte abgetrennt, 1 Stunde mit siedendem Toluol behandelt und das Silber mit einer ammoniakalischen Wasserstoffperoxidlösung entfernt. Raster-ELMIs der Stamperoberfläche zeigen deutlich halbkugelförmige Vertiefungen mit Durchmessern von 250 nm als Abbild der Polymerkügelchen. Der Stamper wurde auf einem Durchmesser von 13 cm randbeschnitten und in eine Kunststoffpresse eingelegt. Es wurde ein handelsübliches Epoxidharz eingegossen und thermisch ausgehärtet. Die Nickelplatte konnte von der Handplatte abgezogen werden. Der so hergestellte Abdruck wurde dann mit einer 20 nm dicken Au-Schicht bedampft. Reflexionsmessungen durch das Substrat ergeben eine Reduktion auf 40 % für eine Wellenlänge von 800 nm verglichen mit einer entsprechenden Au-Schicht auf einem ebenen Epoxid-Substrat.

**Patentansprüche**

1.  Irreversibles optisches Aufzeichnungsmedium, umfassend ein Substrat mit texturierter Oberfläche und einer auf dieser texturierten Substratoberfläche aufgebrachten Metall- oder Halbleiterschicht mit einer optischen Absorption von 5 bis 95 % und einer Dicke von 10 bis 50 nm, wobei die texturierte Oberfläche eine Struktur ohne periodische Anordnung von Erhebungen oder Vertiefungen mit einem Durchmesser von mehr als 200 nm und bis zu 500 nm aufweist und daß diese Struktur unter Einwirkung einer Lichtstrahlung veränderbar ist.

2.  Irreversibles optisches Aufzeichnungsmedium nach Anspruch 1, dadurch gekennzeichnet, daß die halbkugelförmigen Strukturen Erhebungen oder Vertiefungen mit einem einheitlichen Durchmesser von mehr als 200 nm und bis 500 nm sind.

3.  Irreversibles optisches Aufzeichnungsmedium nach Anspruch 1, dadurch gekennzeichnet, daß die halbkügelförmigen Strukturen in einer Mischung von Erhebungen oder Vertiefungen mit unterschiedlichen Durchmessern von mehr als 200 nm und bis 500 nm vorliegen.

4.  Verfahren zur Herstellung irreversibler optischer Aufzeichnungsmedien durch Herstellen eines Substrats mit einer texturierten Oberfläche aus einem Polymeren aus der Gruppe der Polycarbonate, Polyester, Polyvinylchlorid, Polymethylstyrol, Polymethacrylester und Polymethylmethacrylester durch Pressen oder mittels Spritzgußtechnik unter Verwendung eines Stampers und Beschichten der texturierten Oberfläche des Substrats mit einer Metall- oder Halbleiterschicht mit einer optischen Absorption von 5 bis 95 % in einer Dicke von 10 bis 50 nm, dadurch gekennzeichnet, daß der Stamper durch Aufbringen einer Dispersion von Polymerkügelchen mit Durchmessern von mehr als 200 nm und bis 500 nm in einem Lösungsmittel auf ein ebenes Hilfssubstrat, Entfernen des Lösungsmittels, Bedampfen der Schicht der Polymerkügelchen mit einer elektrisch leitenden Schicht, Verstärken dieser Schicht durch chemische und/oder elektrische Abscheidung und durch anschließendes Trennen von Vorlage und der als Stamper dienenden Metallreplik hergestellt wird.

**Claims**

1.  An irreversible optical recording medium comprising a substrate having a textured surface and a metal or semiconductor layer applied to said textured substrate surface and having an optical absorption from 5 to 95% and a thickness from 10 to 50 nm, wherein the textured surface has a structure without periodic arrangement of elevations or depressions of from more than 200 nm to 500 nm in diameter, this structure being capable of altering on exposure to light.

2. An irreversible optical recording medium as claimed in claim 1, wherein the hemispherical structures are elevations or depressions having a uniform diameter of from more than 200 pm to 500 nm.

3. An irreversible optical recording medium as claimed in claim 1, wherein the hemispherical structures are present in a mixture of elevations or depressions having different diameters within the range from more than 200 nm to 500 nm.

4. A process for fabricating an irreversible optical recording medium by producing a substrate having a textured surface from a polymer of the group consisting of the polycarbonates, polyesters, polyvinyl chloride, polymethylstyrene, polymethacrylates and polymethyl methacrylates by pressing or by injection molding using a stamper and coating the textured surface of the substrate in a thickness from 10 to 50 nm with a metal or semiconductor layer having an optical absorption from 5 to 95%, which comprises producing the stamper by applying a dispersion of polymer beads from more than 200 nm to 500 nm in diameter in a solvent to a planar auxiliary substrate, removing the solvent, coating the layer of polymer beads with an electroconductive layer by vapor deposition, thickening this layer by chemical and/or electrical deposition and by subsequently separating the original and the metal replicate serving as stamper.

**Revendications**

1. Support d'enregistrement optique irréversible comprenant un substrat à surface texturée et une couche de métal ou de semi-conducteur ayant une absorption optique de 5 à 95 % et une épaisseur de 10 à 50 nm appliquée sur cette surface texturée, cette dernière présentant une structure sans dispositif périodique de saillies ou de creux de diamètre compris entre 200 et 500 nm, et cette structure étant modifiable sous l'action d'un rayonnement lumineux.

2. Support d'enregistrement optique irréversible selon la revendication 1, caractérisé par le fait que les structures, hémisphériques, sont des saillies ou des creux de diamètre uniforme compris entre 200 et 500 nm.

3. Support d'enregistrement optique irréversible selon la revendication 1, caractérisé par le fait que les structures hémisphériques se présentent sous la forme d'un mélange de saillies ou de creux de différents diamètres compris entre 200 et 500 nm.

4. Procédé de fabrication de supports d'enregistrement optiques irréversibles par fabrication d'un substrat à surface texturée en un polymère du groupe des polycarbonates, polyesters, polychlorure de vinyle, polyméthylstyrène, polyméthacrylates et polyméthylméthacrylates par moulage par compression ou par injection avec utilisation d'une matrice et revêtement de la surface texturée du substrat d'une couche de métal ou de semi-conducteur ayant une absorption optique de 5 à 95 % et une épaisseur de 10 à 50 nm, caractérisé par le fait que la matrice est fabriquée par application sur un substrat auxiliaire plan d'une dispersion de globules de polymère de diamètre compris entre 200 et 500 nm dans un solvant, élimination du solvant, application par évaporation d'une couche conductrice sur la couche de globules de polymère, renforcement de cette couche conductrice par dépôt chimique et/ou électrique et ensuite séparation du modèle de la réplique métallique servant de matrice.